# EUROPÄISCHE PATENTSCHRIFT

(11) **EP 1 041 393 B1**
(45) Veröffentlichungstag und Bekanntmachung des Hinweises auf die Patenterteilung: **02.06.2004**
(21) Anmeldenummer: 00106366.8
(22) Anmeldetag: 24.03.2000
(51) Int. Cl.: G01S 7/497, G01S 7/481, G01B 11/06, B65H 1/18

(54) **Optoelektronische Vorrichtung**
Opto-electronic device
Dispositif optoélectronique

(30) Priorität: 01.04.1999 DE 19914962
(43) Veröffentlichungstag der Anmeldung: 04.10.2000
(73) Patentinhaber: Leuze electronic GmbH + Co KG, 73277 Owen/Teck (DE)
(72) Erfinder: Quapil, Gerald, Dr., 73277 Owen/Teck (DE); Böhmer, Klaus, 73278 Schlierbach (DE)
(74) Vertreter: Ruckh, Rainer Gerhard, Dr.

(56) Entgegenhaltungen:
- DE-A- 2 104 893
- DE-A- 3 915 371
- GB-A- 1 230 912
- GB-A- 2 043 389
- DAMMERT W R ET AL: "MESSUNG VON ZWEIDIMENSIONALEN VERSCHIEBUNGEN MITTELS LASER-TRIANGULATION" TECHNISCHES MESSEN TM, R.OLDENBOURG VERLAG. MUNCHEN, DE, Bd. 59, Nr. 11, 1. November 1992 (1992-11-01), Seiten 428-435, XP000321276 ISSN: 0171-8096

## Beschreibung

Die Erfindung betrifft eine optoelektronische Vorrichtung gemäß dem Oberbegriff des Anspruchs 1.

Derartige optoelektronische Vorrichtungen weisen typischerweise einen Sender auf, neben welchem in vorgegebenem Abstand der Empfänger mit mehreren nebeneinanderliegend angeordneten Empfangselementen liegt. Dabei kann der Empfänger insbesondere als CCD-Zeilenelement ausgebildet sein.

Mit derartigen optoelektronischen Vorrichtungen kann bei der Detektion von Objekten auch eine Information über deren Abstand zur Vorrichtung gewonnen werden, in dem die Verteilung der auf dem Empfänger auftreffenden Empfangslichtstrahlen ausgewertet wird.

Die DE 39 15 371 A1 betrifft eine Einrichtung zur Steuerung der Hubbewegung eines Stapeltischs einer Bogen verarbeitenden Maschine, mit einem die Stapelhöhe erfassenden Sensor, durch den eine die Hubbewegung bewirkende Vorrichtung ansteuerbar ist. Der Sensor ist ein berührungslos die Höhenlage der Stapeloberfläche im Bereich der vorderen Oberkante des Bogenstapels erfassender Fotosensor.

Der Fotosensor und eine einen Lichtstrahl aussendende Lichtquelle sind derart in einem gemeinsamen Gehäuse angeordnet, dass der Lichtstrahl und die Abtastrichtung des Sensors sich in Sollhöhenlage an der vorderen Oberkante des Bogenstapels schneiden.

Die DE-OS 2 104 893 betrifft eine Vorrichtung zur Abtastung von Kanten von Gegenständen, die an einer Abtasteinrichtung vorbeibewegt werden. Über eine gemeinsame Optik wird eine Kante auf einem ersten Spalt und ein Wandabschnitt des Gegenstands und / oder ein Umgebungsbereich des Gegenstands auf weiteren Spalten mit nachgeschalteten fotoelektrischen Empfängern abgebildet. Mittels der von den weiteren fotoelektrischen Empfängern abgegebenen Signale während der Abbildung der Kante auf dem ersten Spalt wird eine Schwellenspannung hergestellt, deren Überschreiten durch vom ersten fotoelektrischen Empfänger abgegebene Signale als Kriterium für eine ausgewählte Lage der Kante vorgesehen ist.

Der Erfindung liegt die Aufgabe zugrunde, eine optoelektronische Vorrichtung der eingangs genannten Art so auszubilden, dass mit dieser die Höhenlage einer Objektkante relativ zur optoelektronischen Vorrichtung zuverlässig erfassbar und einstellbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Bei der erfindungsgemäßen optoelektronischen Vorrichtung sind die Sendelichtstrahlen des Senders auf eine Objektkante ausgerichtet, so dass nur ein Teil der Sendelichtstrahlen als Empfangslichtstrahlen auf den Empfänger zurückreflektiert wird. Durch diese Empfangslichtstrahlen wird ein Teil der Empfangselemente des Empfängers beleuchtet. Die Verteilung dieser beleuchteten Empfangselemente wird in der Auswerteeinheit der optoelektronischen Vorrichtung registriert und wird zur Ermittlung der Höhenlage der Objektkante verwendet.

Erfindungsgemäß wird zur Kalibrierung der Verteilungen der beleuchteten Empfangselemente ein Distanzsensor mit einem zweiten Sender eingesetzt, welcher Pilot-Sendelichtstrahlen emittiert, die auf das Objekt gerichtet sind. In der Auswerteeinheit werden die Strahlverläufe der Sendelichtstrahlen und Pilot-Sendelichtstrahlen als Geometriedaten abgespeichert, wobei dort die mittels der Pilot-Sendelichtstrahlen ermittelten Distanzwerte erfasst werden.

Durch diese Kalibrierung werden genaue Ermittlungen unterschiedlicher Höhenlagen der Objektkanten auch bei unterschiedlichen Distanzen des Objekt zur optoelektronischen Vorrichtung ermöglicht.

In einer vorteilhaften Ausführungsform ist in der Auswerteeinheit der optoelektronischen Vorrichtung ein Sollwert abgespeichert. Zudem sind Mittel zur Erfassung der Abweichung der aktuellen Höhenlage von der Sollposition vorgesehen.

Diese Abweichung kann zum einen zur Kontrolle der Höhenlage einer Objektkante verwendet werden. In einer besonders vorteilhaften Ausführungsform wird diese Abweichung in eine Regelvorrichtung eingelesen, mittels derer die Höhenlage der Objektkante auf die Sollposition einstellbar ist.

Besonders vorteilhaft wird mit einer derartigen Anordnung die Höhe eines Papierstapels, der beispielweise am Einlauf dieser Druckmaschine angeordnet ist, nicht nur erfasst sondern zudem auf eine vorgegebene Höhe eingeregelt.

Zudem ist die Anordnung auch zur Stapelhöhenkontrolle bei Stanzmaschinen einsetzbar. Generell können mit der Anordnung nicht nur Papierstapel sondern auch Folien, Wellpappen und andere Materialien vermessen werden.

In einer weiteren vorteilhaften Ausführungsform wird mittels der optoelektronischen Vorrichtung auch das Hochfahren eines Papierstapels an einer Druckmaschine vor Beginn der Bearbeitung der Papierstapel kontrolliert. Hierzu weist die optoelektronische Vorrichtung einen Schaltausgang auf, der ein Objektfeststellungssignal abgibt, sobald ein Papierstapel in den vom Empfänger erfassten Erfassungsbereich eindringt. Wird ein Papierstapel mit hoher Geschwindigkeit in den Erfassungsbereich des Empfängers eingefahren, wird über das Objektfeststellungssignal eine Steuereinheit aktiviert, welche den Papierstapel abbremst, worauf dessen Objektkante in die Sollposition eingeregelt wird.

Der wesentliche Vorteil hierbei besteht darin, dass zusätzliche, insbesondere mechanische Vorrichtungen zur Feststellung der Bewegung des Papierstapels sowie für dessen Abbremsung entfallen, wodurch der konstruktive Aufwand derartiger Anordnungen erheblich reduziert wird.

Die Erfindung wird im nachstehenden anhand der Zeichnungen erläutert. Es zeigen:
- Figur 1:: Schematische Darstellung eines Teils der erfindungsgemäßen optoelektronischen Vorrichtung im Längsschnitt.
- Figur 2:: Querschnitt durch die optoelektronische Vorrichtung gemäß Figur 1.
- Figur 3:: Anordnung eines Papierstapels in einer ersten Höhenlage vor der optoelektronischen Vorrichtung gemäß Figuren 1 und 2 für drei verschiedene Abstände,
a) im Abstand d1,
b) im Abstand d2,
c) im Abstand d3.
- Figur 4:: Anordnung eines Papierstapels in einer zweiten Höhenlage vor der optoelektronischen Vorrichtung gemäß Figuren 1 und 2 für drei verschiedene Abstände,
a) im Abstand d1,
b) im Abstand d2,
c) im Abstand d3.
- Figur 5:: Kennlinie zur Kalibrierung der Verteilungen der beleuchteten Empfangselemente des Empfängers der optoelektronischen Vorrichtung.
- Figur 6:: Anordnung zur Steuerung und Regelung der Höhenlage eines Papierstapels mit der optoelektronischen Vorrichtung gemäß den Figuren 1 und 2.

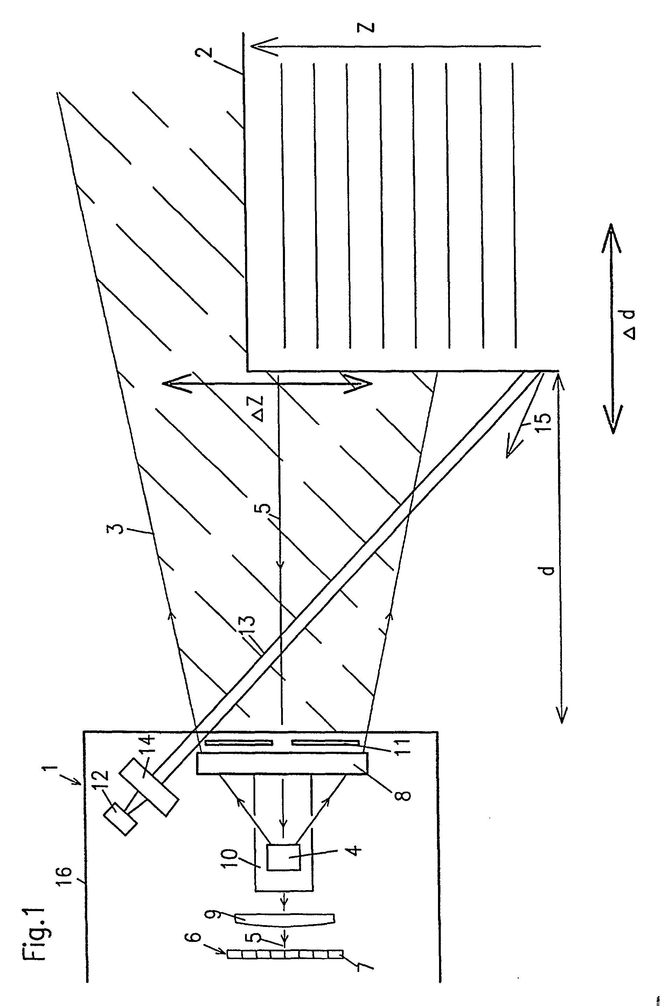

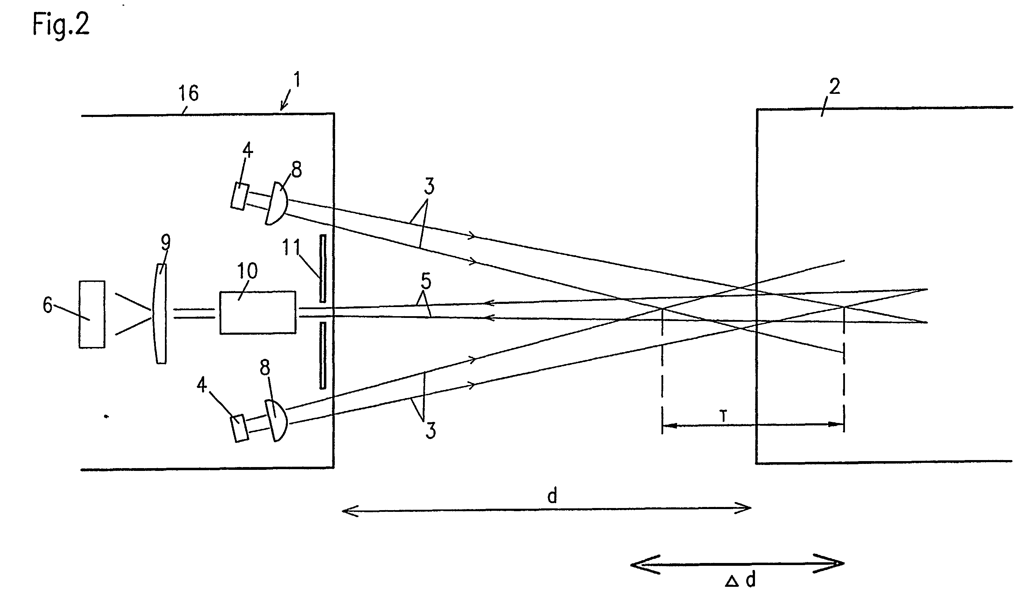

In den Figuren 1 und 2 ist ein Ausführungsbeispiel einer optoelektronischen Vorrichtung 1 zur Erfassung der Höhenlage einer Objektkante dargestellt. Wie aus Figur 1 ersichtlich ist, besteht das Objekt aus einem Papierstapel 2, welcher beispielsweise an einer Druckmaschine oder dergleichen angeordnet ist. Zur Steuerung der Druckmaschine ist unter anderem notwendig die Höhe Z dieses Papierstapels 2 zu erfassen. Dabei kann die Höhe Z des Papierstapels 2 im Bereich ΔZ variieren. Zur Erfassung der Höhe Z des Papierstapels 2 wird mit der optoelektronischen Vorrichtung 1 die Höhenlage der die Objektkante bildenden Oberkante des Papierstapels 2 erfasst. Hierzu ist die optoelektronische Vorrichtung 1 seitlich in Abstand zum Papierstapel 2 angeordnet und befindet sich im wesentlichen in der Höhe der Oberkante des Papierstapels 2. Der Abstand d des Papierstapels 2 zur optoelektronischen Vorrichtung 1 kann dabei innerhalb des Bereichs Δd variieren.

Die optoelektronische Vorrichtung 1 weist zwei Sendelichtstrahlen 3 emittierende Sender 4 sowie einen Empfangslichtstrahlen 5 empfangenden Empfänger 6 auf. Die Sender 4 bestehen aus Leuchtdioden. Der Empfänger 6 weist mehrere nebeneinanderliegende Empfangselemente 7 auf und ist im vorliegenden Ausführungsbeispiel von einem CCD-Zeilenelement gebildet. Alternativ kann der Empfänger von einem CMOS-Zeilenelement oder dergleichen gebildet sein.

Die Sender 4 und der Empfänger 6 liegen in einer horizontalen Ebene und sind jeweils in Abstand zueinander angeordnet. Dabei sind die Sender 4 symmetrisch beidseits des Empfängers 6 angeordnet. Prinzipiell können anstelle zweier Sender 4 auch mehrere oder auch nur ein Sender 4 vorgesehen sein.

Die Längsachse des CCD-Zeilenelements verläuft senkrecht zu der Strahlachse der vom Papierstapel 2 zurückreflektierten Empfangslichtstrahlen 5 in vertikaler Richtung. Bei dem in Figur 1 dargestellten Ausführungsbeispiel verläuft die Längsachse des CCD-Zeilenelements in vertikaler Richtung.

Den Sendern 4 ist zur Strahlformung der Sendelichtstrahlen 3 jeweils eine Zylinderlinse 8 vorgeordnet, deren Längsachsen jeweils in vertikaler Richtung verlaufend angeordnet sind. Anstelle einer Zylinderlinse 8 können auch diffraktive optische Elemente oder Kombinationen aus difftaktiven und brechenden optischen Elementen eingesetzt werden. Beispiele hierfür sind Plankonvexlinsen und Streufolien. Dabei sind in jedem Fall die optischen Achsen der Sendelichtstrahlen 3 so im Raum orientiert, dass durch eine Überlagerung der Sendelichtstrahlen im Bereich des Papierstapels, insbesondere in dem durch Δd und ΔZ definierten Messbereich, eine optimale Beleuchtungsstärke erhalten wird. Dem Empfänger 6 ist eine von einer vorzugsweise rotationssymmetrischen Linse gebildete Empfangsoptik 9 vorgeordnet. Vor dieser ist ein Dove-Prisma 10 angeordnet, welchem wiederum eine Empfangsblende 11 vorgeordnet ist.

Wie aus Figur 2 ersichtlich ist, ist oberhalb der Ebene, in welcher die Sender 4 und der Empfänger 6 angeordnet sind, ein weiterer Sender 12 angeordnet, welcher Pilot-Sendelichtstrahlen 13 emittiert. Dieser Sender 12 befindet sich vorzugsweise gemeinsam mit dem Empfänger 6 in einer vertikal verlaufenden Ebene. Dieser Sender 12 ist Bestandteil eines Distanzsensors. Prinzipiell kann der Sender 12 einen weiteren Empfänger aufweisen. Die Distanzmessung kann dabei insbesondere nach dem Triangulationsprinzip erfolgen.

Im vorliegenden Beispiel ist dem Sender 12 jedoch der Empfänger 6 zugeordnet, so dass kein weiterer Empfänger vorgesehen werden muss.

Dem Sender 12 ist eine Sendeoptik 14 nachgeordnet. Diese Sendeoptik 14 besteht vorzugsweise aus einer rotationssymmetrischen Linse und ist so ausgebildet, dass vom Sender 12 ein paralleles Strahlenbündel von Pilot-Sendelichtstrahlen 13 emittiert wird. Prinzipiell kann der Sender 12 auch Pilot-Sendelichtstrahlen 13 emittieren, deren Strahldurchmesser sich mit größer werdender Distanz verjüngt. Vorzugsweise weisen die Pilot-Sendelichtstrahlen 13 einen kreisförmigen Strahlquerschnitt auf. Diese Pilot-Sendelichtstrahlen 13 verlaufen schräg nach unten in Richtung des Papierstapels 2, dessen Frontseite einen Teil der Pilot-Sendelichtstrahlen 13 als Pilot-Empfangslichtstrahlen 15 zur optoelektronischen Vorrichtung 1 zurückreflektiert.

Sämtliche Sender 4, 12 und der Empfänger 6 sind an eine nicht dargestellte Auswerteeinheit angeschlossen, welche von einem Microcontroller oder dergleichen gebildet ist. Sämtliche Komponenten der optoelektronischen Vorrichtung 1 sind in einem Gehäuse 16 angeordnet, welches nicht dargestellte Austrittsfenster aufweist, durch welche die Sendelichtstrahlen 3, die Pilot-Sendelichtstrahlen 13 sowie die Empfangslichtstrahlen 5 und die Pilot-Empfangslichtstrahlen 15 geführt sind.

Mit den Sendelichtstrahlen 3 wird die Oberkante des Papierstapels 2 erfasst. Die optoelektronische Vorrichtung 1 ist dabei seitlich der Oberkante des Papierstapels 2 so angeordnet, dass die Oberkante des Papierstapels 2 für den gesamten Variationsbereich ΔZ der Höhe des Papierstapels 2 und der Distanzen Δd des Papierstapels 2 zur optoelektronischen Vorrichtung 1 mit den Sendelichtstrahlen 3 ausgeleuchtet wird.

Demgegenüber sind die Pilot-Sendelichtstrahlen 13 so ausgerichtet, dass diese über den gesamten Höhen- und Distanzbereich des Papierstapels 2 unterhalb der Oberkante des Papierstapels 2 vollständig auf die im wesentlichen ebene, vertikal angeordnete Frontseite des Papierstapels 2 treffen.

Die Sendelichtstrahlen 3 emittierenden Sender 4 einerseits und der Pilot-Sendelichtstrahlen 13 emittierende weitere Sender 12 andererseits werden alternierend über die Auswerteeinheit aktiviert, so dass entweder nur die Sendelichtstrahlen 3 oder die Pilot-Sendelichtstrahlen 13 auf den Papierstapel 2 treffen.

Dabei wird mit dem Dove-Prisma 10 die räumliche Verteilung der Empfangslichtstrahlen 5 oder Pilot-Empfangslichtstrahlen 15 in der Ebene senkrecht zu deren Strahlachsen so gedreht, dass deren räumliche Verteilungen vollständig auf das CCD-Zeilenelement abgebildet werden.

Wie aus den Figuren 1 und 2 ersichtlich ist, wird durch die den Sendern 4 nachgeordneten Zylinderlinsen 8 eine derartige Strahlformung der Sendelichtstrahlen 3 erzielt, dass die Strahlquerschnitte der Sendelichtstrahlen 3 die Form von langgestreckten Ellipsen aufweisen. Dabei verlaufen die Längsachsen der Ellipsen in vertikaler Richtung. Die Sender 4 sind dabei seitlich in Abstand zur Oberkante des Papierstapels 2 so angeordnet, dass die Sendelichtstrahlen 3 den gesamten Höhenbereich ΔZ ausleuchten, in welchem die Oberkante des Papierstapels 2 liegen kann. Insbesondere sind die Strahldurchmesser der Sendelichtstrahlen 3 so dimensioniert, dass diese Bedingung für sämtliche Distanzen des Papierstapels 2 innerhalb des Variationsbereichs Δd erfüllt sind. Auf diese Weise ist gewährleistet, dass für sämtliche Höhenlagen der Oberkante des Papierstapels 2 und sämtliche auftretenden Distanzen d der Frontseite des Papierstapels 2 zur optoelektronischen Vorrichtung 1 die Oberkante des Papierstapels 2 mit den im wesentlichen in horizontaler Richtung emittierten Sendelichtstrahlen 3 erfasst wird. Demgegenüber verlaufen die Pilot-Sendelichtstrahlen 13 schräg nach unten, so dass diese in jedem Fall unterhalb der Oberkante des Papierstapels 2 vollständig auf die Frontseite des Papierstapels 2 auftreffen.

Wie aus Figur 2 ersichtlich ist, überlappen sich die Sendelichtstrahlen 3 der Sender 4 und die vom Papierstapel 2 zurückreflektierten Empfangslichtstrahlen 5 in einem vorgegebenen Bereich, dem sogenannten Tiefenschärfebereich T. Innerhalb dieses Bereichs ist die Oberkante des Papierstapels 2 mit den Sendelichtstrahlen 3 erfaßbar. Wie in Figur 2 dargestellt ist durch eine geeignete Wahl der Strahlverläufe der Sende- 3 und Empfangslichtstrahlen 5 gewährleistet, dass der Tiefenschärfebereich T den gesamten Variationsbereich Δd der Distanz d des Papierstapels 2 zur optoelektronischen Vorrichtung 1 abdeckt. Auf diese Weise ist eine sichere Detektion der Oberkante des Papierstapels 2 über den gesamten Bereich Δd gewährleistet.

Zur Bestimmung der Höhenlage der Oberkante des Papierstapels 2 wird die Verteilung der Empfangselemente 7 ausgewertet, welche durch die vom Papierstapel 2 zurückreflektierten Empfangslichtstrahlen 5 beleuchtet werden. Wie aus Figur 1 ersichtlich ist, trifft je nach aktueller Höhenlage Z des Papierstapels 2 ein bestimmter Teil der Sendelichtstrahlen 3 auf die Frontseite des Papierstapels 2 und wird von diesem als Empfangslichtstrahlen 5 auf den Empfänger 6 zurückreflektiert, wodurch ein Teil der Empfangselemente 7 beleuchtet wird. Der andere Teil der Sendelichtstrahlen 3 verläuft oberhalb der Oberkante des Papierstapels 2 an diesem vorbei und gelangt nicht zum Empfänger 6.

Die Verteilung der beleuchteten Empfangselemente 7 gibt jedoch noch kein eindeutiges Maß für die Höhe Z des Papierstapels 2. Dies beruht darauf, dass im allgemeinen die Verteilung der beleuchteten Empfangselemente 7 von der Distanz d des Papierstapels 2 abhängig ist.

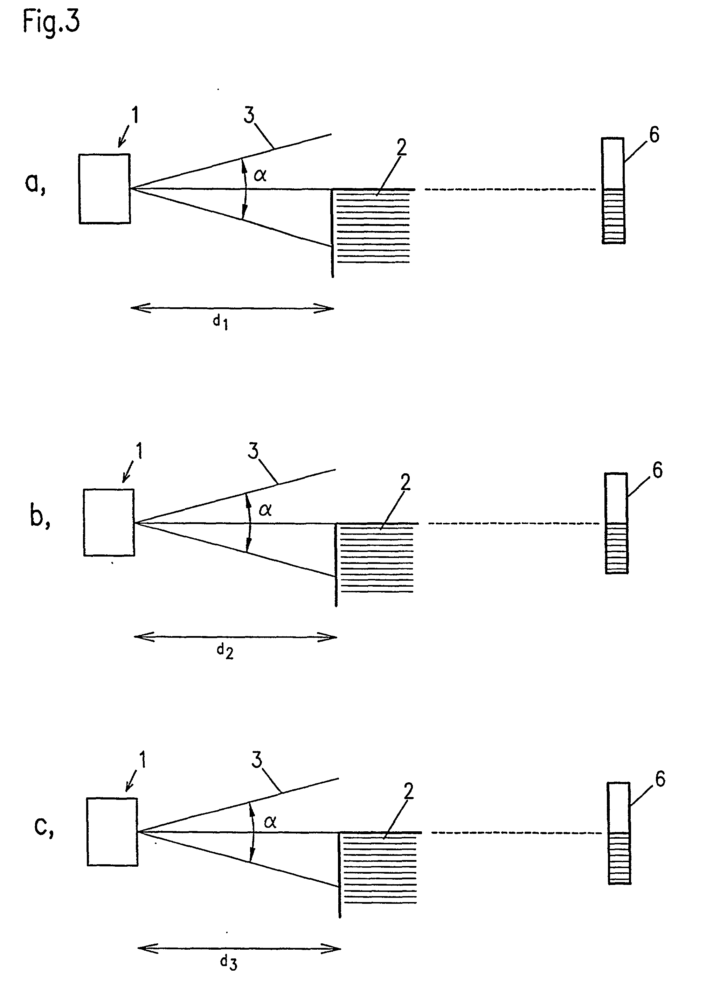

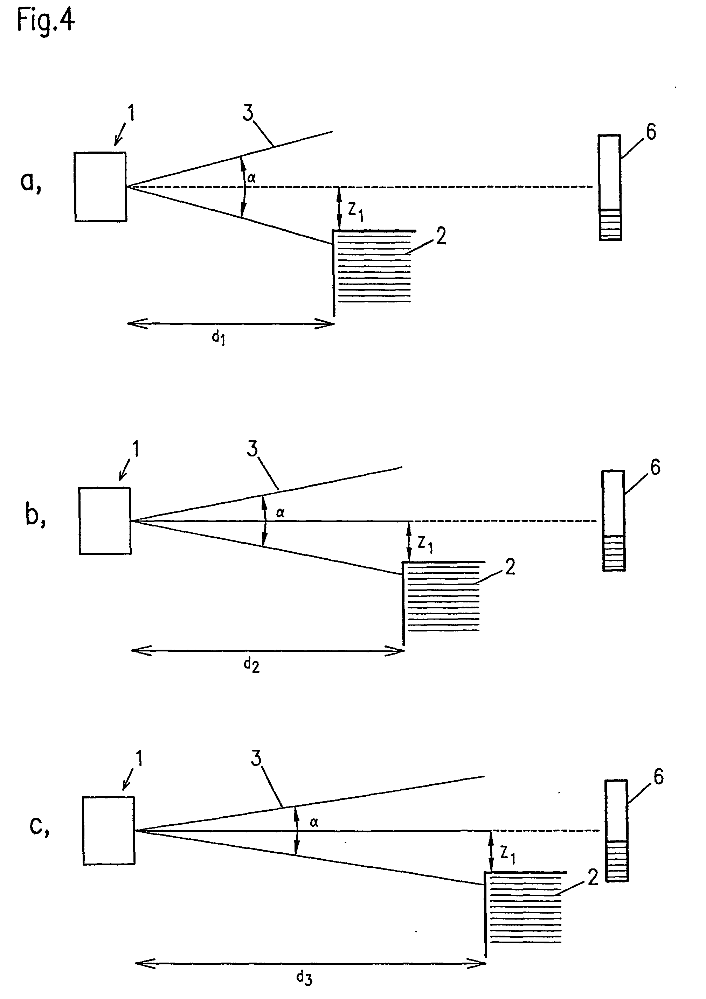

Dies ist in den Figuren 3 und 4 veranschaulicht. In den Figuren 3a-c ist jeweils die optoelektronische Vorrichtung 1 vor dem Papierstapel 2 dargestellt, wobei in den einzelnen Figuren 3a, b, c der Papierstapel 2 in unterschiedlichen Distanzen d1, d2, d3 (d3 > d2 > d1) zur optoelektronischen Vorrichtung 1 angeordnet ist. Dabei liegt die Höhe Z des Papierstapels 2 jeweils in der optischen Achse der parallel verlaufenden und einen Öffnungswinkel α aufweisenden Sendelichtstrahlen 3. In diesem Fall wird für sämtliche Distanzen d1, d2, d3 dieselbe Ausleuchtung des Empfängers 6 erhalten, welche schematisch jeweils hinter der Anordnung der Vorrichtung 1 und des Papierstapels 2 in den Figuren 3a, b, c dargestellt ist. Für jede der Distanzen d1, d2 und d3 ist jeweils die Hälfte der Empfangselemente 7 ausgeleuchtet. Der ausgeleuchtete Teil des Empfängers 6 ist dabei in den Figuren 3a, b, c schraffiert dargestellt.

Die in den Figuren 4a, b, c dargestellten Anordnungen entsprechen im wesentlichen den Anordnungen gemäß den Figuren 3a, b, c. Im Unterschied zu den Anordnungen gemäß den Figuren 3a, b, c liegt bei den Anordnungen gemäß den Figuren 4a, b, c die Oberkante des Papierstapels 2 jeweils um Z1 unterhalb der Strahlachse der Sendelichtstrahlen 3, deren Öffnungswinkel wiederum α beträgt.
In diesem Fall ist die Verteilung der durch die Empfangslichtstrahlen 5 beleuchteten Empfangselemente 7 abhängig von der Distanz d des Papierstapels 2 zur optoelektronischen Vorrichtung 1. Je größer die Distanz d ist, desto größer ist die Anzahl der beleuchteten Empfangselemente 7. Der beleuchtete Teil des Empfängers 6 ist in den Figuren 4a, b, c, wiederum schraffiert dargestellt.

Erfindungsgemäß wird der Pilot-Sendelichtstrahlen 13 emittierende Sender 12 zur Kalibrierung der Verteilungen beleuchteter Empfangselemente 7, welche durch die von dem Papierstapel 2 zurückreflektierten Empfangslichtstrahlen 5 erhalten werden, verwendet.

Die Ermittlung dieser Daten erfolgt während eines Einlernvorgangs. Für die Dauer des Einlernvorgangs ist nur der Pilot-Sendelichtstrahlen 13 emittierende Sender 12 aktiviert, während die anderen Sender 4 deaktiviert sind. Während des Einlemvorgangs wird die Distanz d des Papierstapels 2 zur optoelektronischen Vorrichtung 1 innerhalb des gesamten Variationsbereichs Δd schrittweise geändert.

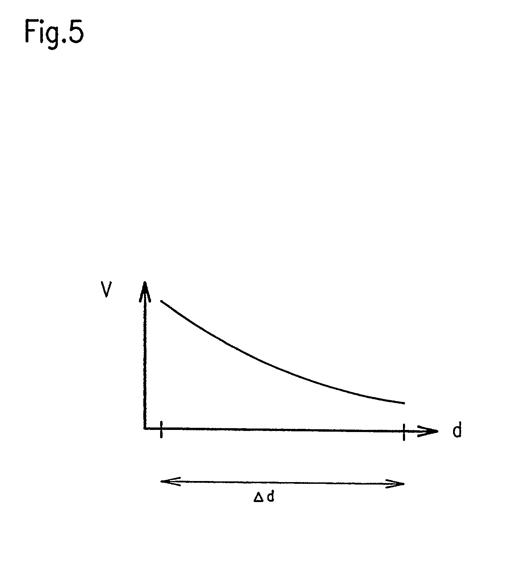

Dabei wird für jeden Distanzwert d die durch die Pilot-Empfangslichtstrahlen 15 erhaltene Verteilung V der beleuchteten Empfangselemente 7 registriert und in der Auswerteeinheit abgespeichert. Auf diese Weise wird eine Kennlinie der Verteilungen V in Abhängigkeit der Distanz d des Papierstapels 2 zur Vorrichtung 1 erhalten (Figur 5).

Diese Kennlinie und die in der Auswerteeinheit ebenfalls abgespeicherten geometrischen Strahlparameter der Sendelichtstrahlen 3 und der Pilot-Sendelichtstrahlen 13 werden zur Kalibrierung der durch die Empfangslichtstrahlen 5 erzeugten Verteilungen der beleuchteten Empfangselemente 7 verwendet.

Dabei wird ausgenutzt, dass bei bekannter Distanz d der Vorrichtung 1 zum Papierstapel 2 und bei vorgegebenen Strahlverläufen der Sendelichtstrahlen 3 und Pilot-Sendelichtstrahlen 13 und damit auch der Empfangslichtstrahlen 5 und der Pilot-Empfangslichtstrahlen 15 ein ein-eindeutiger Zusammenhang zwischen den Verteilungen der beleuchteten Empfangselemente 7 bei aktivierten Sendelichtstrahlen 3 oder Pilot-Sendelichtstrahlen 13 besteht. Die Strahlverläufe sind dabei insbesondere durch die Neigungen, die Öffnungswinkel α und die Strahlbreiten der Sendelichtstrahlen 3 und der Pilot-Sendelichtstrahlen 13 festgelegt. Diese Parameter sind in der Auswerteeinheit als Geometriedaten abgespeichert.

Die Kalibrierung erfolgt während des auf den Einlemvorgang folgenden Arbeitsbetriebs der optoelektronischen Vorrichtung 1. Während dieses Arbeitsbetriebs ist zunächst nur der Pilot-Sendelichtstrahlen 13 emittierende Sender 12 aktiviert. Dabei wird der aktuelle Distanzwert des Papierstapels 2 zur optoelektronischen Vorrichtung 1 ermittelt. Zu diesem Distanzwert wird der entsprechende Kennlinienwert ausgelesen.

Daraufhin wird der Pilot-Sendelichtstrahlen 13 emittierende Sender 12 abgeschaltet und die Sendelichtstrahlen 3 emittierenden Sender 4 werden zur Erfassung der Höhenlage Z des Papierstapels 2 aktiviert.

Durch die von der Oberkante des Papierstapels 2 zurückreflektierten Empfangslichtstrahlen 5 wird entsprechend der Höhenlage des Papierstapels 2 eine entsprechende Verteilung von beleuchteten Empfangselementen 7 auf dem Empfänger 6 erhalten. Diese Verteilung wird anhand des ausgelesenen Kennlinienwerts V für die entsprechende aktuelle Distanz d und der Geometriedaten der Sendelichtstrahlen 3 und der Pilot-Sendelichtstrahlen 13 kalibriert. Hierzu wird aus dem Kennlinienwert V und den Geometriedaten ein Korrekturfaktor berechnet. Mittels dieses Korrekturfaktors wird die Distanzabhängigkeit der durch die Empfangslichtstrahlen 5 generierten Verteilung der beleuchteten Empfangselemente 7 ermittelt, so dass die auf diese Weise kalibrierte Verteilung der beleuchteten Empfangselemente 7 des Empfängers 6 ein eindeutiges Maß für die Höhenlage des Papierstapels 2 liefert.

Somit werden im Arbeitsbetrieb die Sendelichtstrahlen 3 und die Pilot-Sendelichtstrahlen 13 fortlaufend alternierend aktiviert. Falls die Sender 4 und 12 Sendelichtstrahlen 3 und Pilot-Sendelichtstrahlen 13 mit unterschiedlichen Wellenlängen emittieren können die Sender 4 und 12 prinzipiell auch gleichzeitig aktiviert werden.

Für den Fall, dass der Distanzsensor einen separaten Empfänger 6 aufweist, braucht eine Kennlinie wie in Figur 5 dargestellt nicht ermittelt werden. In diesem Fall erfolgt die Kalibrierung unmittelbar mittels des vom Distanzsensor ermittelten Distanzwerts.

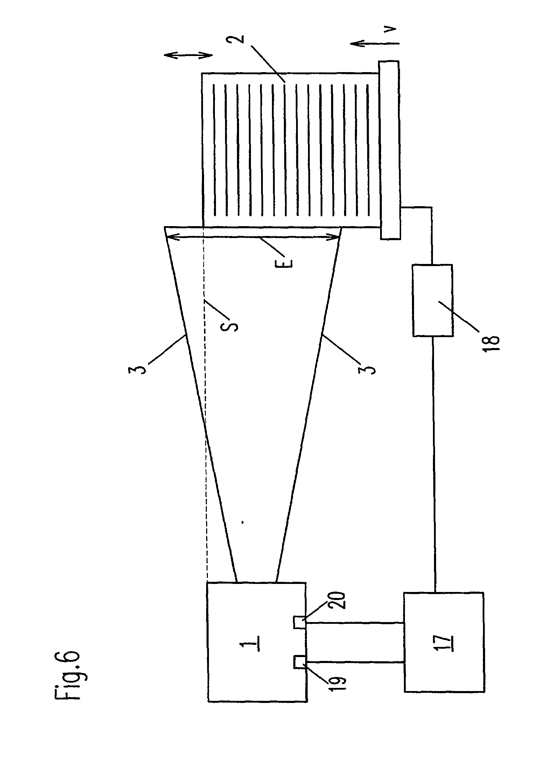

Figur 6 zeigt eine Anordnung mit der erfindungsgemäßen optoelektronischen Vorrichtung 1 und einer an diese angeschlossenen Regelvorrichtung 17 zur Erfassung der Höhenlage der Oberkante eines Papierstapels 2. Erfindungsgemäß wird mittels dieser Anordnung die Oberkante des Papierstapels 2 auf eine vorgegebene Sollposition S geregelt. Hierzu ist die Regelvorrichtung 17 an ein Stellglied 18 angeschlossen, mittels dessen die Höhenlage des Papierstapels 2 einstellbar ist. Die Regelvorrichtung 17 besteht vorzugsweise aus einer Rechnereinheit, einer Steuereinheit oder dergleichen. Das Stellglied 18 umfasst Antriebe oder dergleichen, die zur Höhenverstellung des Papierstapels 2 dienen.

Die Sollposition S für die Höhenlage der Oberkante des Papierstapels 2 wird vorzugsweise als Parameterwert in die Auswerteeinheit der optoelektronischen Vorrichtung eingelesen und dort abgespeichert. Im vorliegenden Ausführungsbeispiel fällt diese Sollposition mit der Oberkante des Gehäuses 16 der optoelektronischen Vorrichtung 1 zusammen. Dadurch kann durch Ausrichten der Oberkante des Gehäuses 16 die Sollposition auf einfache Weise durch das Bedienpersonal vorgegeben und eingestellt werden.

Wie aus Figur 6 ersichtlich wird mit den Sendelichtstrahlen 3 ein vorgegebener Erfassungsbereich E erfasst. Innerhalb dieses Erfassungsbereichs E kann die Höhenlage der Oberkante des Papierstapels 2 während des Betriebs der Druckmaschine innerhalb des Bereichs ΔZ variieren.

In der optoelektronischen Vorrichtung 1 wird fortlaufend die aktuelle Höhenlage der Oberkante des Papierstapels 2 erfasst. Dabei wird die Differenz der Höhenlage zur Sollposition gebildet. Die so ermittelte Abweichung der Höhenlage von der Sollposition wird über wenigstens einen Ausgang 19 in die Regelvorrichtung 17 eingegeben.

Der Ausgang 19 kann vorteilhafterweise als Analogausgang ausgebildet sein. Alternativ können auch ein oder mehrere Digital-Ausgänge vorgesehen sein.

In Abhängigkeit der in der optoelektronischen Vorrichtung 1 ermittelten Abweichung steuert die Regelvorrichtung 17 das Stellglied 18 entsprechend an, so dass der Papierstapel 2 in seiner Höhe verstellt wird, bis die Sollposition erreicht ist.

Die optoelektronische Vorrichtung 1 weist zusätzlich einen binären Schaltausgang 20 auf, der ebenfalls an eine Regelvorrichtung 17 angeschlossen ist. Prinzipiell kann der Schaltausgang 20 auch an eine weitere Steuereinheit angeschlossen sein.

Über den Schaltausgang 20 wird ein Objektfeststellungssignal ausgegeben, sobald der Papierstapel 2, insbesondere die Oberkante des Papierstapels 2 innerhalb des Erfassungsbereichs E liegt und damit von der optoelektronischen Vorrichtung 1 erfasst wird.

Mit dem über den Schaltausgang 20 aussgegebenen Objektfeststellungssignal wird die Zuführbewegung des Papierstapels 2 zur Druckmaschine gesteuert. Vor Inbetriebnahme oder bei einem Wechsel von Papierstapeln 2 wird ein Papierstapel 2 vorzugsweise mit großer Geschwindigkeit V von unten in den Erfassungsbereich E geführt. Sobald diese Oberkante des Papierstapels 2 innerhalb des Erfassungsbereichs E registriert wird, wird durch die Ausgabe des Objektfeststellungssignals in der Regelvorrichtung 17 ein Steuerbefehl generiert, über welchen mittels des Stellglieds 18 der Papierstapel 2 abgebremst wird.

Anschließend erfolgt mittels des Regelvorgangs, der über das am Ausgang 19 ausgegebene Signal gesteuert wird, die Einregelung der Höhenlage der Oberkante des Papierstapels 2 auf die Sollposition.

### Bezugszeichenliste

- (1): Optoelektronische Vorrichtung
- (2): Papierstapel
- (3): Sendelichtstrahlen
- (4): Sender
- (5): Empfangslichtstrahlen
- (6): Empfänger
- (7): Empfangselemente
- (8): Zylinderlinse
- (9): Empfangsoptik
- (10): Dove-Prisma
- (11): Empfangsblende
- (12): Sender
- (13): Pilot-Sendelichtstrahlen
- (14): Sendeoptik
- (15): Pilot-Empfangslichtstrahlen
- (16): Gehäuse
- (17): Regelvorrichtung
- (18): Stellglied
- (19): Ausgang
- (20): Schaltausgang

## Patentansprüche

1. Optoelektronische Vorrichtung mit wenigstens einem Sendelichtstrahlen emittierenden Sender und einem Empfangslichtstrahlen empfangenden Empfänger, welcher aus mehreren in Abstand zueinander angeordneten Empfangselementen besteht, **dadurch gekennzeichnet, dass** zur Erfassung der Höhenlage einer Objektkante relativ zur optoelektronischen Vorrichtung (1) die vom Sender (4) emittierten Sendelichtstrahlen (3) auf die Objektkante ausgerichtet sind und die durch die von dem Teil der vom Objekt zurückreflektierten Empfangslichtstrahlen (5) beleuchteten Empfangselemente (7) in einer Auswerteeinheit zur Ermittlung der Höhenlage registriert werden, wobei zur Kalibrierung der Verteilungen der beleuchteten Empfangselemente (7) ein Distanzsensor mit einem zweiten Sender (12) vorgesehen ist, welcher Pilot-Sendelichtstrahlen (13) emittiert, die auf das Objekt gerichtet sind, wobei in der Auswerteeinheit die Strahlverläufe der Sendelichtstrahlen (3) und Pilot-Sendelichtstrahlen (13) als Geometriedaten abgespeichert sind, und wobei in der Auswerteeinheit die mittels der Pilot-Sendelichtstrahlen (13) ermittelten Distanzwerte erfasst werden.

2. Optoelektronische Vorrichtung nach Anspruch 1, **dadurch gekennzeichnet, dass** in der Auswerteeinheit eine Sollposition abgespeichert ist, und dass Mittel zur Erfassung der Abweichung der aktuellen Höhenlage von der Sollposition vorgesehen sind.

3. Optoelektronische Vorrichtung nach Anspruch 1 oder 2, **dadurch gekennzeichnet, dass** die vom Sender (12) des Distanzsensors emittierten Pilot-Sendelichtstrahlen (13) einen konstanten oder sich verjüngenden Strahlquerschnitt aufweisen, dass die von dem Objekt als Pilot-Empfangslichtstrahlen (15) zurückreflektierten Pilot-Sendelichtstrahlen (13) auf den Empfänger (6) geführt sind, und dass zur Kalibrierung die Verteilungen der von den Pilot-Empfangslichtstrahlen (15) beleuchteten Empfangselemente (7) in Abhängigkeit der Distanz des Objekts in der Auswerteeinheit erfasst werden.

4. Optoelektronische Vorrichtung nach Anspruch 1 - 3, **dadurch gekennzeichnet, dass** diese zur Stapelhöhenerfassung von Papierstapeln (2) eingesetzt wird.

5. Optoelektronische Vorrichtung nach einem der Ansprüche 1 - 4, **dadurch gekennzeichnet, dass** der Empfänger (6) von einem CCD-Zeilenelement gebildet ist.

6. Optoelektronische Vorrichtung nach einem der Ansprüche 4 oder 5, **dadurch gekennzeichnet, dass** diese seitlich des Papierstapels (2) angeordnet ist, so dass der Lichtfleck der Sendelichtstrahlen (3) den gesamten Höhenbereich, innerhalb dessen die Oberkante des Papierstapels (2) variiert, erfasst.

7. Optoelektronische Vorrichtung nach Anspruch 6, **dadurch gekennzeichnet, dass** der Lichtfleck der Sendelichtstrahlen (3) die Form einer langgestreckten Ellipse aufweist, deren Längsachse in vertikaler Richtung verläuft.

8. Optoelektronische Vorrichtung nach Anspruch 7, **dadurch gekennzeichnet, dass** zur Erzeugung des in vertikaler Richtung gestreckten Lichtflecks mehrere Sender (4) vorgesehen sind, denen jeweils eine Sendeoptik (14) zur Strahlformung der Sendelichtstrahlen (3) nachgeordnet sind.

9. Optoelektronische Vorrichtung nach Anspruch 8, **dadurch gekennzeichnet, dass** die Sendeoptiken (14) von Zylinderlinsen (8) gebildet sind.

10. Optoelektronische Vorrichtung nach einem der Ansprüche 7 - 9, **dadurch gekennzeichnet, dass** die Längsachse des CCD-Zeilenelements parallel zur Längsachse des Lichtflecks der Sendelichtstrahlen (3) verläuft.

11. Optoelektronische Vorrichtung nach einem der Ansprüche 1 - 10, **dadurch gekennzeichnet, dass** der Lichtfleck der Pilot-Sendelichtstrahlen (13) vollständig auf eine Seitenfläche des Papierstapels (2) trifft, wobei der Lichtfleck im wesentlichen kreisförmig ausgebildet ist.

12. Optoelektronische Vorrichtung nach Anspruch 11, **dadurch gekennzeichnet, dass** dem Pilot-Sendelichtstrahlen (13) emittierenden Sender (12) eine Sendeoptik (14) nachgeordnet ist, welche von einer rotationssymmetrischen Linse gebildet ist.

13. Optoelektronische Vorrichtung nach einem der Ansprüche 1 - 12, **dadurch gekennzeichnet, dass** dem Empfänger (6) eine Empfangsoptik (9) und eine Empfangsblende (11) vorgeordnet ist, wobei zwischen der Empfangsoptik (9) und der Empfangsblende (11) ein Dove-Prisma (10) zur Drehung des auf den Empfänger (6) auftreffenden Lichtflecks der Empfangslichtstrahlen (5) angeordnet ist.

14. Optoelektronische Vorrichtung nach einem der Ansprüche 1 - 13, **dadurch gekennzeichnet, dass** diese wenigstens einen Ausgang (19) zur Ausgabe der Abweichung der aktuellen Höhenlage von der Sollposition aufweist, und dass mittels einer Regelvorrichtung (17) in Abhängigkeit der über den Ausgang (19) ausgegebenen Abweichung die Objektkante auf die Sollposition einstellbar ist.

15. Optoelektronische Vorrichtung nach einem der Ansprüche 1 - 14, **dadurch gekennzeichnet, dass** diese einen Schaltausgang (20) aufweist, über welchen ein Objektfeststellungssignal bei Eintritt eines Objektes in den vom Empfänger (6) erfassten Erfassungsbereich E ausgebbar ist.

16. Optoelektronische Vorrichtung nach Anspruch 15, **dadurch gekennzeichnet, dass** der Schaltausgang (20) auf eine Steuereinheit geführt ist, mittels derer die Geschwindigkeit des Objekts bei Vorliegen eines Objektfeststellungssignals reduziert wird.

17. Optoelektronische Vorrichtung nach Anspruch 16, **dadurch gekennzeichnet, dass** die Höhenlage der Objektkante des mit der reduzierten Geschwindigkeit bewegten Objektes mittels der Regelvorrichtung (17) auf die Sollposition geregelt wird.

## Claims

1. Optoelectronic device with at least one transmitter emitting transmitted light beams and a receiver receiving received light beams, which consists of several receiving elements arranged at a spacing from one another, **characterised in that** for detection of the height position of an object edge relative to the optoelectronic device (1) the transmitted light beams (3) emitted by the transmitter (4) are oriented onto the objected edge and the receiving elements (7) illuminated by the received light beams (5) reflected back by the part of the object are registered in an evaluating unit for determining the height position, wherein for calibration of the distributions of the eliminated receiving elements (7) a distance sensor with a second transmitter (12) is provided, which emits pilot transmitted light beams (13) which are directed onto the object, wherein the beam paths of the transmitted light beams (3) and pilot transmitted light beams (13) are stored in the evaluating unit as geometric data and wherein the distance values determined by means of the pilot transmitted light beams (13) are detected in the evaluating unit.

2. Optoelectronic device according to claim 1, **characterised in that** a target position is stored in the evaluating unit and that means for detecting the deviation of the actual height position from the target position are provided.

3. Optoelectronic device according to claim 1 or 2, **characterised in that** the pilot transmitted light beams (13) emitted by the transmitter (12) of the distance sensor have a constant or tapering beam cross-section, that the pilot transmitted light beams (13) reflected back from the object as pilot received light beams (15) are guided to the receiver (6) and that for calibration the distributions of the receiving elements (7) illuminated by the pilot received light beams (15) are detected in the evaluating unit in dependence on the distance of the object.

4. Optoelectronic device according to claims 1 to 3, **characterised in that** this is used for stack height detection of paper stacks (2).

5. Optoelectronic device according to one of claims 1 to 4, **characterised in that** the receiver (6) is formed by a CCD line element.

6. Optoelectronic device according to one of claims 4 and 5, **characterised in that** this is arranged laterally of the paper stack 92) so that the light spot of the transmitted light beams (3) detects the entire height range within which the upper edge of the paper stack (2) varies.

7. Optoelectronic device according to claim 6, **characterised in that** the light spot of the transmitted light beams (3) has the form of an elongated ellipse, the longitudinal axis of which extends in vertical direction.

8. Optoelectronic device according to claim 7, **characterised in that** for generation of the light spot elongated in vertical direction several transmitters (4) are provided, downstream of each of which a respective transmission optical system is arranged for beam shaping of the transmitted light beams (3).

9. Optoelectronic device according to claim 8, **characterised in that** the transmission optical systems are formed by cylinder lenses (8).

10. Optoelectronic device according to one of claims 7 to 9, **characterised in that** the longitudinal axis of the CCD line element extends parallel to the longitudinal axis of the light spot of the transmitted light beams (3).

11. Optoelectronic device according to one of claims 1 to 10, **characterised in that** the light spot of the pilot transmitted light beams (13) is incident entirely on a side surface of the paper stack 92), wherein the light spot is formed to be substantially circular.

12. Optoelectronic device according to claim 11, **characterised in that** a transmission optical system (14), which is formed by a rotationally symmetrical lens, is arranged downstream of the transmitter (12) emitting pilot transmitted light beams (13).

13. Optoelectronic device according to one of claims 1 to 12, **characterised in that** a receiving optical system (9) and a receiving aperture (11) are arranged upstream of the receiver (6), wherein a Dove prism (10) for rotation of the light spot, which is incident on the receiver (6), of the received light beams (5) is arranged between the receiving optical system (9) and the receiving aperture (11).

14. Optoelectronic device according to one of claims 1 to 13, **characterised in that** this comprises at least one output (19) for delivery of the deviation of the actual height position from the target position and that the object edge is adjustable to the target position by means of a regulating device (17) in dependence on the deviation delivered by way of the output (19).

15. Optoelectronic device according to one of claims 1 to 14, **characterised in that** this comprises a switch output (20), by way of which an object detection signal can be delivered on entry of an object into the detection region E detected by the receiver (6).

16. Optoelectronic device according to claim 15, **characterised in that** the switch output (20) is led to a control unit, by means of which the speed of the object is reduced when an object detection signal is present.

17. Optoelectronic device according to claim 16, **characterised in that** the height position of the object edge of the object moved at reduced speed is regulated by means of the regulating device (17) to the target position.

## Revendications

1. Dispositif optoélectronique comprenant au moins un émetteur émettant des rayons lumineux d'émission et un récepteur recevant des rayons lumineux de réception, lequel se compose de plusieurs éléments de réception placés à distance les uns des autres, **caractérisé par le fait que**, pour mesurer la hauteur du bord d'un objet par rapport au dispositif optoélectronique (1), les rayons lumineux d'émission (3) émis par l'émetteur (4) sont dirigés sur le bord de l'objet et que les éléments de réception (7) éclairés par la partie des rayons lumineux de réception (5) réfléchis par l'objet sont enregistrés dans une unité d'évaluation servant à déterminer la hauteur, et que, pour étalonner les répartitions des éléments de réception (7) éclairés, il est prévu un capteur de distance avec un deuxième émetteur (12) qui émet des rayons lumineux d'émission pilotes (13) qui sont dirigés sur l'objet, les trajectoires des rayons lumineux d'émission (3) et des rayons lumineux d'émission pilotes (13) étant mémorisées dans l'unité d'évaluation sous forme de données géométriques et les valeurs de distance déterminées au moyen des rayons lumineux d'émission pilotes (13) étant enregistrées dans l'unité d'évaluation.

2. Dispositif optoélectronique selon la revendication 1, **caractérisé par le fait qu'**une position nominale est mémorisée dans l'unité d'évaluation et qu'il est prévu des moyens pour mesurer la différence entre la hauteur actuelle et la position nominale.

3. Dispositif optoélectronique selon la revendication 1 ou 2, **caractérisé par le fait que** les rayons lumineux d'émission pilotes (13) émis par l'émetteur (12) du capteur de distance présentent une section de faisceau constante ou allant en se rétrécissant, que les rayons lumineux d'émission pilotes (13) réfléchis par l'objet en tant que rayons lumineux de réception pilotes (15) sont guidées vers le récepteur (6) et que, pour l'étalonnage, les répartitions des éléments de réception (7) éclairés par les rayons lumineux de réception pilotes (15) sont enregistrées dans l'unité d'évaluation en fonction de la distance de l'objet.

4. Dispositif optoélectronique selon les revendications 1 à 3, **caractérisé par le fait que** celui-ci est utilisé pour la mesure de hauteur de piles de papier (2).

5. Dispositif optoélectronique selon l'une des revendications 1 à 4, **caractérisé par le fait que** le récepteur (6) est formé d'un élément à lignes CCD.

6. Dispositif optoélectronique selon l'une des revendications 4 ou 5, **caractérisé par le fait que** celui-ci est placé à côté de la pile de papier (2), de sorte que le spot lumineux des rayons lumineux d'émission (3) embrasse toute la plage de hauteurs à l'intérieur de laquelle le bord supérieur de la pile de papier (2) varie.

7. Dispositif optoélectronique selon la revendication 6, **caractérisé par le fait que** le spot lumineux des rayons lumineux d'émission (3) présente la forme d'une ellipse allongée dont le grand axe s'étend en direction verticale.

8. Dispositif optoélectronique selon la revendication 7, **caractérisé par le fait que**, pour générer le spot lumineux s'étendant en direction verticale, il est prévu plusieurs émetteurs (4) suivis chacun d'une optique d'émission (14) pour la mise en forme du faisceau des rayons lumineux d'émission (3).

9. Dispositif optoélectronique selon la revendication 8, **caractérisé par le fait que** les optiques d'émission (14) sont formées de lentilles cylindriques (8).

10. Dispositif optoélectronique selon l'une des revendications 7 à 9, **caractérisé par le fait que** l'axe longitudinal de l'élément à lignes CCD est parallèle au grand axe du spot lumineux des rayons lumineux d'émission (3).

11. Dispositif optoélectronique selon l'une des revendications 1 à 10, **caractérisé par le fait que** le spot lumineux des rayons lumineux d'émission pilotes (13) rencontre entièrement une surface latérale de la pile de papier (2), ledit spot lumineux étant essentiellement de forme circulaire.

12. Dispositif optoélectronique selon la revendication 11, **caractérisé par le fait que** l'émetteur (12) émettant les rayons lumineux d'émission pilotes (13) est suivi d'une optique d'émission (14), laquelle est formée d'une lentille à symétrie de révolution.

13. Dispositif optoélectronique selon l'une des revendications 1 à 12, **caractérisé par le fait que** le récepteur (6) est précédé d'une optique de réception (9) et d'un diaphragme de réception (11), un prisme de Dove (10) étant disposé entre l'optique de réception (9) et le diaphragme de réception (11) pour la rotation du spot lumineux des rayons lumineux de réception (5) arrivant sur le récepteur (6).

14. Dispositif optoélectronique selon l'une des revendications 1 à 13, **caractérisé par le fait que** celui-ci présente au moins une sortie (19) pour délivrer la différence entre la hauteur actuelle et la position nominale et que le bord de l'objet est réglable à la position nominale au moyen d'un dispositif de réglage (17) en fonction de la différence délivrée par la sortie (19).

15. Dispositif optoélectronique selon l'une des revendications 1 à 14, **caractérisé par le fait que** celui-ci présente une sortie de commutation (20) au moyen de laquelle un signal de détection d'objet peut être délivré en cas d'entrée d'un objet dans la zone de couverture embrassée par le récepteur (6).

16. Dispositif optoélectronique selon la revendication 15, **caractérisé par le fait que** la sortie de commutation (20) est amenée à une unité de commande au moyen de laquelle on réduit la vitesse de l'objet si un signal de détection d'objet est présent.

17. Dispositif optoélectronique selon la revendication 16, **caractérisé par le fait que** la hauteur du bord de l'objet déplacé à la vitesse réduite est réglée à la position nominale au moyen du dispositif de réglage (17).
